(19) Europäisches Patentamt
European Patent Office
Office européen des brevets

(11) Publication number: 0 005 464
A1

(12) # EUROPEAN PATENT APPLICATION

(21) Application number: 79101253.7

(22) Date of filing: 25.04.79

(51) Int. Cl.$^2$: C 07 F 9/12

(30) Priority: 15.05.78 US 905674

(43) Date of publication of application: 28.11.79 Bulletin 79/24

(84) Designated Contracting States: BE CH DE FR GB IT NL

(71) Applicant: STAUFFER CHEMICAL COMPANY
Westport Connecticut 06880(US)

(72) Inventor: Giolito, Silvio Louis
6-19 150th Place
Whitestone, N.Y. 11357(US)

(74) Representative: Jaeger, Klaus, Dr. rer. nat. et al,
JAEGER, GRAMS & PONTANI Patentanwälte
Bergstrasse 48 1/2
D-8035 München-Gauting(DE)

(54) **Color improvement of alkylphenyl phosphate esters.**

(57) The color of alkylphenyl phosphate esters which ·ave developed high color due to storage in the dark is reduced by adding small quantities of phosphite ester thereto and applying heat.

EP 0 005 464 A1

# COLOR IMPROVEMENT OF ALKYLPHENYL PHOSPHATE ESTERS

## BACKGROUND OF THE INVENTION

The present invention relates to the reduction and stabilization of color of phosphate esters. More particularly, the present invention relates to the restoration of original color to alkylphenyl phosphate esters which have become darkened due to storage in the dark.

The production of low color and color stable phosphate esters from alkylphenol precursors has been a long recognized problem. In the conventional production of phosphate esters from alkylphenols, undesirable color formation frequently occurs. Color can decrease the phosphate ester's value as a commercial product.

Alkylphenol esters of phosphoric acid find extensive use as plasticizers for nitrocellulose and polyvinyl chloride (PVC) compositions. In addition, they also serve as additives for gasoline, functional fluids and oils; and are useful as flame retardants in plastics, and the like.

The preparation of alkylphenyl esters of

phosphoric acid is generally accomplished by the addition of phosphorus oxychloride, ($POCl_3$) to selected alkylphenols and gradually heating the resulting reaction mixture to about 180°C. The reaction is accelerated by the presence of a Friedel-Crafts catalyst such as aluminum chloride, ($AlCl_3$). In conventional processing, the reaction product is vacuum distilled to remove unreacted alkylphenols as an initial fraction, and the alkylphenyl phosphate ester as a product fraction leaving high boiling point materials and the catalyst in the residue. The distilled product fraction is then washed thoroughly with sodium hydroxide solution to remove free phenolics and acidic materials, followed by water washing. The product fraction is then generally treated with activated carbon to remove color causing impurities.

This process, which works very well with esters produced from conventional by-product alkylphenols, produces unsatisfactory material when applied to mixed alkylphenols produced by the alkylation of phenol with olefins. It is found that these products discolor upon exposure to air, exposure to heat, or storage in the dark. The discoloration has been attributed to the presence of 2,6-dialkylphenols in the alkylated phenol. Steric hindrance caused by the double ortho substitution in 2,6-dialkylphenols and in 2,4,6-trialkylphenols renders the phenols unresponsive to washing with sodium hydroxide solution, so that they are not removed by the caustic wash.

These so called "hindered phenols", can oxidize in the presence of air to form highly colored quinones, which are thought to be the source of undesirable discoloration in the product. The color is bleached-out somewhat in the light, but color reappears

upon storage in the dark. The color can intensify when the ester is mixed or milled with polyvinyl chloride (PVC) at elevated temperatures in the presence of oxygen.

Thus, for example, in the case of 2,6-diisopropylphenol, the corresponding diphenoquinone or benzoquinone is highly colored. Esters made from mixtures of alkylated phenols which contain 2,6-diisopropylphenol are often too highly colored for many uses, particularly for use as plasticizers. Because of their limited utility for plasticizer use such esters are less marketable than they would otherwise be.

U. S. Patent 3,931,364 of which the present applicant is co-patentee, discloses a method for reducing and stabilizing the color of alkylphenyl esters of phosphoric acid. The patented method comprises contacting the phosphate esters with an effective amount of a phosphite ester for a sufficient length of time to reduce and stabilize the color of the esters. The patented method generally involves washing the phosphate ester with a dilute caustic solution in the presence of a phosphite ester.

It is thought that this method reduces and stabilizes the color of the phosphate ester by actually removing color-causing quinoid compounds.

Thus, for example, it has been postulated that the phosphite ester and caustic wash solution combine to extract quinoid compounds from the phosphate ester. One proposed mechanism by which the postulated extraction may take place involves a reaction between the phosphite and quinoid compounds whereby the quinoid compound becomes bonded to the phosphite molecule; and a second reaction whereby a

sodium salt or hydrolysate of the phosphite compound is formed by reaction with the aqueous sodium hydroxide. The sodium salt or hydrolysate is soluble in the caustic solution and is washed out of the phosphate ester by the caustic washing.

It has also been postulated that some of the phosphite ester survives the caustic wash and remains in the phosphate ester unreacted. This remaining phosphite ester, although small in amount serves to inhibit, to some extent, the oxidation of any additional alkylphenols which may be present (i.e., 2,6-dialkylphenols) to additional quinoid compounds; thereby inhibiting future discoloration of the phosphate ester.

The patented method, while being a convenient way of reducing color of phosphate esters at a plant site, where caustic washing facilities are available, is quite inconvenient to practice at remote sites, where such facilities are not available. In actual practice, it may be necessary to reduce the color of small quantities of phosphate ester, such as single drums of this material, at a site which is not equipped to conduct a caustic washing operation. Even where it is physically possible to conduct a caustic wash, caustic solutions are corrosive and it is generally preferred not to handle such materials, if their use can be avoided.

Another concern regarding the patented method is that since the caustic wash removes the major portion of the phosphite ester, the amount left in the phosphate ester may not be enough to assure long-term stability.

A need exists for a method for reducing and stabilizing the color of phosphate esters which

is convenient to practice, does not require the use of caustic solutions, and does not result in the extraction of any stabilizing agent from the phosphate ester.

## SUMMARY OF THE INVENTION

It is an object of the present invention to provide a method for the color reduction and stabilization of phosphate esters which is convenient to practice and does not require a caustic wash. It is another object of the present invention to provide a method for the color reduction and stabilization of phosphate esters wherein a sufficient amount of the color reduction and stabilization agent employed remains in the phosphate ester to provide long-term color stability.

Surprisingly and unexpectedly, it has now been found that the color of phosphate esters can be reduced and stabilized without the need for caustic washing by simply adding to the phosphate ester a small but effective amount of phosphite ester and heating for a time sufficient to reduce the color of the phosphate ester. It is not necessary to remove any reaction products which may be formed, and any residual unreacted phosphite ester remains in the phosphate ester as a color stabilization agent.

In accordance with the present invention there is provided a method for the reduction and stabilization of the color of alkylphenyl phosphate ester consisting essentially of adding to the alkylphenyl phosphate esters an effective amount of a phosphite ester and heating for a time sufficient to reduce the color of the phosphate ester.

This invention is applicable to all phosphate esters which are made from the alkylated phenol mixtures which contain hindered phenols, e.g., phenols containing alkyl groups on both positions ortho to the hydroxyl group. The esters may contain 0.5 to 3 alkylaryl groups and 0 to 2.5 phenyl groups. Preferably, the phosphate esters treated by the process of this invention are a mixture of esters containing 1 to 2 alkylaryl groups. The esters correspond to the general formula:

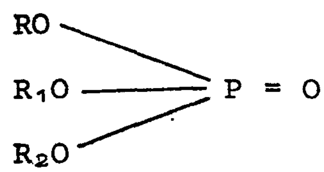

where R is alkylaryl and $R_1$ and $R_2$ may be alkyl, alkylaryl, arylalkyl or aryl, and wherein the alkyl groups can contain from 2 to 20 carbon atoms, more preferably from 2 to 12 carbon atoms. Some triphenylphosphate may also be present.

The alkylated phenols which contain hindered phenols are usually made by alkylating phenol with $C_2$-$C_{12}$ unsaturated hydrocarbons such as ethylene, propylene, isobutylene and its isomers, amylene and its isomers, tripropylene, tetrapropylene, decene, dodecene, diisobutylene and the like.

Typical examples of alkyl radicals are as follows: ethyl, normal propyl, isopropyl, normal butyl, isobutyl, secondary butyl, tertiary butyl, normal amyl, isoamyl, 2-methylbutyl, 2,2-dimethyl propyl, 1-methyl butyl, diethylmethyl, 1,2-dimethyl propyl, tertiary amyl, normal hexyl, 1-methylamyl, 1-ethyl butyl, 1,2,2-trimethyl propyl, 3,3-dimethyl butyl, 1,1,2-trimethyl propyl, 2-methyl amyl, 1,1-dimethyl butyl, 1-ethyl 2-methyl propyl, 1,3-dimethyl butyl, isohexyl, 3-methylamyl, 1,2-dimethyl butyl, 1-methyl 1-ethyl propyl, 2-ethyl normal heptyl, 1,1,2,3-tetramethyl propyl, 1,2-dimethyl, 1-ethyl propyl, 1,1,2-trimethyl butyl, 1-isopropyl 2-methyl propyl, 1-methyl 2-ethyl butyl, 1,1-diethyl propyl, 2-methyl hexyl, 1,1-dimethyl amyl, 1-isopropyl butyl, 1-ethyl 3-methyl butyl, 1,4-dimethyl amyl, isoheptyl, 1-methyl 1-ethyl butyl, 1-ethyl 2-methyl butyl, 1-methyl hexyl, 1-propyl butyl, normal octyl, 1-methyl heptyl, 1,1-diethyl 2-methyl propyl, 1,1,3,3-tetramethyl butyl, 1,1-diethyl butyl, 1,1-dimethyl hexyl, 1-methyl, 1-ethyl amyl, 1-methyl 1-propyl butyl, 2-ethyl hexyl, 6-methyl normal nonyl, 1-methyl octyl, 1-ethyl heptyl, 1,1-dimethyl heptyl, 1-ethyl, 1-propyl butyl, 1,1-diethyl 3-methyl butyl, diisobutyl methyl, 3,5,5-trimethyl hexyl, 3,5-dimethyl heptyl, normal decyl, 1-propyl heptyl, 1,1-diethyl hexyl, 1,1-dipropyl butyl, 2-isopropyl butyl and 2-isopropyl 5-methyl hexyl and $C_{11}$-$C_{20}$ alkyl groups.

Also included are aralkyl groups, e.g., benzyl, alpha- or beta-phenylethyl, alpha, alpha dimethylbenzyl and the like. Also included are cyclohexyl, cycloheptyl, cyclododecyl and the like.

Typical examples of aryl and alkylaryl radicals are phenyl, cresyl, xylyl, alkoxylated phenyl, isopropylphenyl, butylphenyl, alpha alkylbenzylphenyl and alpha, alpha-dialkylbenzylphenyl, e.g. alpha-methylbenzylphenyl, alpha,alpha-dimethylbenzylphenyl, tert-nonylphenyl, amylphenyl, tert-butylphenyl, isooctylphenyl, dodecylphenyl, tertiary octylphenyl and the like.

The present invention is particularly applicable to reducing and stabilizing the color of isopropylphenyl diphenyl phosphate esters.

The phosphite esters used in this invention correspond to the general formula:

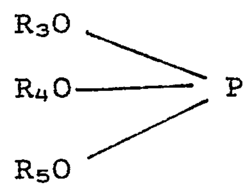

wherein $R_3$, $R_4$ and $R_5$ are radicals, each independently selected from the group consisting of alkyl, cyclyalkyl, aryl, alkylaryl and arylalkyl, wherein the alkyl groups contain from 1 to about 20 carbon atoms, more preferably from 1 to 12 carbon atoms. Furthermore at least one radical from the group $R_3$, $R_4$ or $R_5$ is aryl or alkylaryl. Typical examples of the above radicals are as have been hereinbefore exemplified with respect to the phosphate esters.

The preferred phosphite esters are the alkyl diphenyl phosphite esters. Particularly preferred is octyl diphenyl phosphite.

An amount of phosphite ester sufficient to reduce and stabilize the color of the alkylphenyl phosphate ester is added to the alkylphenyl phosphate ester. While the total amount of phosphite ester which is effective to serve the dual role of color reduction and stabilization may vary in accordance with several factors, such as the concentration of quinoid compounds present in the alkylphenyl phosphate ester and the concentration of free alkylphenol present, it will generally range from about 0.1 to about 1% by weight of alkylphenyl phosphate ester.

The alkylphenyl phosphate ester, with the phosphite ester added, is preferably heated with

agitation for a time sufficient to reduce the color of the alkylphenyl phosphate ester.

The method of the present invention is effective in reducing the color of the alkylphenyl phosphate ester and may be employed to reduce it to the original color as it existed prior to having been discolored by storage in the dark.

Most commercial alkylphenyl phosphate esters contain some unreacted 2,6-dialkylphenols. These esters are usually packaged and shipped in plastic or plastic-lined steel drums to prevent the esters from contacting iron, which is known to promote discoloration of phosphate esters. Phosphate esters which contain unreacted 2,6-dialkylphenols nevertheless become darkened while stored in the drums, due to the "dark-storage" mechanism discussed above. This discoloration is often not discovered until the drum is opened by the ultimate user.

The method of the present invention provides a convenient way to reduce the color of the discolored material without removing it from the drum. The phosphite ester can be added directly to the alkylphenyl phosphate ester in the drum, and the entire contents heated and agitated for a time sufficient to reduce the color of the alkylphenyl phosphate ester. The temperature to which the drum contents are heated should, of course, be within a range which will not adversely affect the integrity of the drum or any liner used. This temperature-range will vary in accordance with the particular materials of construction used in each case.

The alkylphenyl phosphate ester to which the phosphite ester has been added is generally heated to a temperature in the range of from about 90°C. to

about 200°C. This temperature range is convenient to achieve without special equipment and reduces the intensity of the color in a reasonable time. The method can also be carried out at higher or lower temperatures. The time required to reduce the color to a predetermined level will, of course, be greater at lower temperatures than would be required at higher temperatures.

The time required to achieve essentially complete reversal of the discoloration caused by storage of the alkylphenyl phosphate esters in the dark can range from a few minutes to a few hours. Satisfactory color reduction can usually be achieved within a period of time ranging from about 30 minutes to about 5 hours, although periods of time ranging from about 2 to about 3 hours will be found most effective in the majority of the applications.

In order that the present invention be more fully understood, the following examples are given by way of illustration. No specific details or enumerations contained therein should be construed as limitations to the present invention except insofar as they appear in the appended claims. All parts and percentages are by weight unless otherwise specifically designated.

## EXAMPLE 1

Isopropylphenyl diphenyl phosphate having a molar ratio of isopropyl/phenyl of about 0.5 was found to have an original color of 75 APHA. After storage in the dark for 60 days the material darkened to a color greater than 500 APHA.

An aliquot of the darkened isopropylphenyl diphenyl phosphate was heated to 150°C. in an open beaker, with stirring, for about one hour. The color improved slightly, but remained greater than 500 APHA.

## EXAMPLE 2

A second aliquot of the darkened isopropylphenyl diphenyl phosphate ester used in Example 1 was placed in an open beaker equipped with a magnetic stirrer. To the material in the beaker was added 0.5 wt. % of "Mark® C", a commercially-available stabilizer sold by Argus Chemical Company and found on analysis to be mostly octyl diphenyl phosphite.

The beaker contents were heated with stirring for 1 hour at 150°C. After heating, the color of the isopropylphenyl diphenyl phosphate ester was measured and determined to be 100 APHA.

Comparison with Example 1, shows that heating the colored alkylphenyl phosphate ester together with an effective quantity of phosphite ester markedly improves the color of the alkylphenyl phosphate ester.

EXAMPLE 3

Example 2 was continued so that the beaker contents were heated for a total of 2 hours. The color of the isopropylphenyl diphenyl phosphate ester was reduced to 75 APHA.

This experiment shows that the darkened alkylphenyl phosphate ester can be restored to its original color by the method of the present invention.

EXAMPLE 4

The decolorized phosphate ester of Example 3 which had been reduced in color by the method of this invention was stored in a laboratory cabinet (i.e., in the dark) for 60 days. After this period of time, the color of the phosphate ester was measured and determined to be APHA 75.

In addition to restoring the original color to the phosphate ester, the method of the present invention stabilizes the restored color against degradation by storage in the dark.

EXAMPLE 5

A sample of isopropylphenyl diphenyl phosphate having a mole ratio of isopropyl/phenyl of about 0.5 was treated by the same procedure as was used in Example 3. The color of this material was measured before discoloration ("initial color"), after storage in the dark for 60 days ("discolored"), after treatment in accordance with the method of the present invention ("after treatment"), after subsequent storage of the treated sample for 14 days in the dark ("after 14 days") and after 4 months storage of the treated sample in the dark ("after 4 months"). All references herein to "dark storage" are to the storage of material in a laboratory cabinet.

The color of the sample was measured at each of the above-specified intervals with the following results:

| Interval | Color (APHA) |
|---|---|
| Initial Color | 75 |
| Discolored | 500 |
| After Treatment | 75 |
| Treated Sample after 14 days | 75 |
| Treated Sample after 4 months | 75 |

The experiment shows that phosphate esters treated in accordance with the method of the present invention are stabilized against color degradation for extended periods of storage in the dark.

It will thus be seen that the method of the present invention is effective in reducing and stabilizing the color of alkylphenyl phosphate esters. The method is convenient to practice, may be applied to small quantities of phosphate esters, such as single drums; and does not require the use of caustic washing facilities.

The objects set forth above among those made apparent from the preceding description are, therefore effectively attained and, since certain changes may be made in the above method without departure from the scope of the invention, it is intended that all matter contained in the above description shall be interpreted as illustrative and not in a limiting sense.

WHAT IS CLAIMED:

1. A method for the color reduction and stabilization of an alkylphenyl phosphate ester consisting essentially of adding to said alkylphenyl phosphate ester an effective amount of a phosphite ester and heating for a time sufficient to reduce the color of said alkylphenyl phosphate ester.

2. The method of claim 1 wherein said alkylphenyl phosphate ester is a phosphate ester corresponding to the general formula:

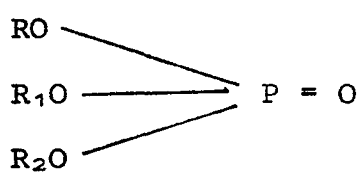

where R is alkylaryl and $R_1$ and $R_2$ may be alkyl, arylalkyl, alkylaryl or aryl and wherein the alkyl groups can contain from 2 to 20 carbon atoms.

3. The method of claim 2 wherein said alkylphenyl phosphate ester is isopropylphenyl diphenyl phosphate.

4. The method of claim 2 wherein said phosphite ester is a phosphite ester corresponding to the general formula:

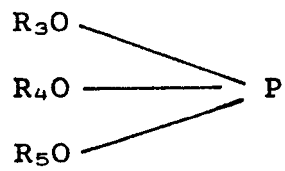

wherein $R_3$, $R_4$ and $R_5$ are radicals, each independently selected from the group consisting of alkyl, cycloalkyl, aryl, alkylaryl and arylalkyl in which the alkyl groups contain from 1 to 20 carbon atoms.

5. The method of claim 4 wherein said phosphite ester is octyl diphenyl phosphite.

6. The method of claim 1 wherein said effective amount of a phosphite ester is an amount ranging from about 0.1% to about 1% by weight of alkylphenyl phosphate ester.

7. The method of claim 1 wherein said temperature is a temperature ranging from about 90°C. to about 200°C.

8. The method of claim 1 wherein said time is a time ranging from about 30 minutes to about 5 hours.

9. A method for the reduction and stabilization of the color of isopropylphenyl diphenyl phosphate consisting essentially of adding to said isopropylphenyl diphenyl phosphate octyl diphenyl phosphite in an amount equivalent to from about 0.1% to about 1.0% by weight of phosphate ester and heating at a temperature ranging from about 90°C. to about 200°C. for a period of time ranging from about 30 minutes to about 5 hours.

10. The method of claim 9 wherein said temperature is about 150°C. and said period of time is from about 2 to about 3 hours.

European Patent Office

# EUROPEAN SEARCH REPORT

Application number EP 79 10 1253

## DOCUMENTS CONSIDERED TO BE RELEVANT

| Category | Citation of document with indication, where appropriate, of relevant passages | Relevant to claim |
|---|---|---|
| D | US - A - 3 931 364 (S.L. GIOLITO) * Whole document * ---- | 1-10 |

**CLASSIFICATION OF THE APPLICATION (Int. Cl.²)**

C 07 F 9/12

**TECHNICAL FIELDS SEARCHED (Int.Cl.²)**

C 07 F 9/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 30-07-1979 | BESLIER |